# EUROPÄISCHE PATENTANMELDUNG

(11) **EP 1 882 862 A2**
(43) Veröffentlichungstag der Anmeldung: **30.01.2008**
(21) Anmeldenummer: 07110591.0
(22) Anmeldetag: 19.06.2007
(51) Int. Cl.: F16D 13/42

(54) **Kupplungsaktor**

(30) Priorität: 28.07.2006 DE 102006035059
(71) Anmelder: ROBERT BOSCH GMBH, 70442 Stuttgart (DE)
(72) Erfinder: Schmitt, Manfred, 64646 Heppenheim (DE); Winter, Thomas, 71691 Freiberg Am Neckar (DE); Kappenstein, Ulrich, 75438 Knittlingen (DE); Gerundt, Oliver, 71292 Friolzheim (DE); Bauer, Uwe, 71701 Schwieberdingen (DE); Shen, Yang, 70372 Stuttgart (DE); Scholler, Carolin, 71672 Marbach Am Neckar (DE)

(57) **Zusammenfassung**

Die Erfindung bezieht sich auf eine Kupplung (10) zur Übertragung eines Drehmomentes (18) von einer Antriebswelle (39) auf mindestens eine Abtriebswelle (50). Die Kupplung (10) umfasst mindestens ein erstes Kupplungselement (44) und mindestens ein zweites Kupplungselement (48), wobei das mindestens eine erste Kupplungselement (44) mit der Antriebswelle (39) und das mindestens eine zweite Kupplungselement (48) mit der mindestens einen Abtriebswelle (50) verbunden sind. Des Weiteren ist mindestens eine Betätigungseinrichtung (20) vorgesehen. Zwischen dem mindestens einen ersten Kupplungselement (44) und dem mindestens einen zweiten Kupplungselement (48) ist mindestens eine betätigbare Anpressplatte (22) aufgenommen, die eine keilförmige Profilierung (26) aufweist.

## Beschreibung

### Stand der Technik

Kupplungen in Kraftfahrzeugen werden in der Regel durch einen Aktor unter Zwischenschaltung einer Übersetzungsvorrichtung betätigt. Die durch den Aktor aufzubringende Energie wird bisher ausschließlich von den eingesetzten Aktoren, bei denen es sich z. B. um einen Elektromotor oder eine hydraulische Pumpe handeln kann, selbst erzeugt. Die vom Aktor aufzubringende Energie hängt von der erforderlichen Kuppelleistung ab und bestimmt zugleich die Dimensionierung des Aktors und der diesem zugeordneten Übersetzungsvorrichtung.

Aus EP 1 178 234 B1 ist eine Kupplungsanordnung bekannt, die eine Stelleinrichtung zum Einrücken und/oder Ausrücken der Kupplungselemente verwendet, wobei die Stelleinrichtung unmittelbar mit einer Antriebswelle verbunden ist und deren Rotationsenergie direkt zur Stellung der Kupplungselemente verwendet. Dadurch ist die zur Betätigung der Kupplungsanordnung notwendige Stellenergie für die Stelleinrichtung direkt aus dem Antriebsstrang beziehungsweise der Antriebswelle entnehmbar. Dies ermöglicht, zur Betätigung der Kupplungsanordnung für die Stelleinrichtung die aus dem Antriebsstrang entnommene Energie nicht erst zum Antreiben eines Elektromotors, eines Elektromagneten oder eines Hydraulikzylinders einzusetzen, sondern die Energie des Antriebsstrangs direkt, ohne Zwischenschaltung einer Umwandlung, der Stelleinrichtung zuzuführen, um somit die Kupplungsanordnung zu betätigen. Die aus EP 1 178 234 B1 bekannte Kupplungsanordnung umfasst eine Antriebswelle und eine Abtriebswelle mit einem ersten Kupplungselement und einem zweiten Kupplungselement, wobei das erste Kupplungselement mit der Antriebswelle und das zweite Kupplungselement mit der Abtriebswelle verbunden ist. Die vorgesehene Stelleinheit gibt einen Sollwert für ein mit der Kupplung zu übertragendes Drehmoment vor. Die Stelleinrichtung verwendet eine Rotationsenergie der Antriebswelle zum Einrücken und/oder Ausrücken der Kupplungselemente, wobei das Einrücken und/oder Ausrücken der Kupplungselemente mittels eines schräg verzahnten Zahnrades erfolgt.

Aus DE 197 29 997 ist eine Stelleinrichtung für eine Reibungskupplung bekannt, welche den bei Reibungskupplungen auftretenden Verschleiß kompensiert, ohne dass zusätzlicher Bauraum benötigt wird. Hierbei weist die Stelleinrichtung einen separaten Antrieb auf, der über eine Abtriebseinrichtung mit der Reibungskupplung in Wirkverbindung gebracht werden kann. Dabei ist die Abtriebseinrichtung mit einer Kompensationseinrichtung versehen, um eine verschleißbedingte Lageänderung einer Anpressfeder der Reibungskupplung auszugleichen.

Aus DE 41 33 962 ist ein Verstellantrieb in Form eines Planetengetriebes bekannt, mit einem achsparallel dazu angeordneten elektrischen Gleichstrommotor. Die Welle des Gleichstrommotors ist direkt mit einem als Planetenrad ausgebildeten Antriebsrad verbunden. Das Planetengetriebe ist in zwei Ebenen ausgebildet und wird in der ersten Ebene durch das Antriebsrad zu einem Getriebe mit einer einem Planetengetriebe ähnlichen Wirkungsweise, da das Antriebsrad stillsteht und das Hohlrad und das Sonnenrad in zueinander entgegengesetzter Drehrichtung angetrieben werden. In der zweiten Ebene des Planetengetriebes bewirken Zähnezahl-Differenzen am Hohlrad beziehungsweise am Sonnenrad zu den korrespondierenden Zähnezahlen der ersten Ebene eine entsprechend übersetzte Drehzahl am Planetenradträger. Hierbei ist es auch möglich, das Planetengetriebe mit einem Gewindetrieb zu verbinden, um keine translatorischen Bewegungen auszuführen.

### Offenbarung der Erfindung

Der erfindungsgemäß vorgeschlagenen Lösung folgend wird durch die vorgeschlagene Kupplung Energie in Form von Rotationsenergie aus der Drehzahldifferenz zwischen einem Druckplattenabschnitt eines Kupplungskorbes und mindestens einer Kupplungsscheibe für die Betätigung der Kupplung ausgenutzt, um die Leistungsanforderung des die Kupplung betätigenden mindestens einen Aktors zu vermindern und somit das elektrische Bordnetz eines Kraftfahrzeugs zu entlasten.

Während der Kuppelphase entsteht eine Drehzahldifferenz zwischen mindestens einer Kupplungsscheibe und einer Anpressplatte. Drückt die Anpressplatte gegen die Kupplungsscheibe, so wird die Anpressplatte aufgrund der sich einstellenden Reibung in tangentiale Richtung bewegt, d. h. "mitgezogen". Ist eine Keilprofilierung zwischen den einander kontaktierenden Stirnseiten von Anpressplatte und einem im Kupplungskorb ausgebildeten Druckplattenabschnitt realisiert, kann ein Teil dieser Radialkraft in eine in axiale Richtung wirkende Druckkraft umgewandelt werden, die wiederum zum Zusammendrücken der Kupplungsscheibe und der Anpressplatte ausgenutzt werden kann. Der in eine axiale Druckkraft umgewandelte Teil der radialen Kraft ist abhängig von der Drehzahldifferenz zwischen mindestens einer Anpressplatte und mindestens einem im Kupplungskorb ausgebildeten Druckplattenabschnitt, dem Keilwinkel der Keilprofilierung sowie den Reibungseigenschaften zwischen den beiden miteinander reibenden Kupplungsteilen. Die Reibungseigenschaften wiederum sind abhängig von der Materialauswahl für die Anpressplatte und den mindestens einen Druckplattenabschnitt, der im Kupplungskorb ausgebildet ist.

Die erfindungsgemäß vorgeschlagene Lösung macht sich das niedrige Drehmoment sowie die geringe Dauerdrehzahldifferenz an einer Kupplung zu nutze, so dass die Anforderungen an die Aktorgröße und damit dessen Strombedarf erheblich verringert werden. Die Anforderungen an die Aktorgröße und dessen Strombedarf sinken umso stärker, je größer der in eine axiale Druckkraft umgewandelte Teil der Radialkraft zwischen der Anpressplatte und der Kupplungsscheibe ist, wenn diese aneinander angedrückt werden.

Die eingesetzte Anpressplatte kann an einer ihrer Stirnseiten eine bevorzugt keilförmig ausgebildete Profilierung umfassen, wobei die keilförmig ausgebildete Profilierung in Umfangsrichtung einzelne, bevorzugt mindestens drei, durch Freiräume voneinander getrennte, Keilabschnitte umfasst. Die mit einer keilförmig am Umfang verlaufenden Profilierung versehene Anpressplatte wirkt bevorzugt mit mindestens einem im Kupplungskorb ausgebildeten Druckplattenabschnitt zusammen, der mit einer komplementär zur keilförmigen Profilierung der Stirnseite der Anpressplatte ausgebildeten Gegenkeilprofilierung versehen ist.

Die vorgeschlagene Kupplung kann sowohl an Einscheiben-Kupplungen als auch an Mehrscheiben-Kupplungen ausgebildet werden, wobei im Falle des Einsatzes an Mehrscheiben-Kupplungen jede der Kupplungsscheiben mit einer Ausgangswelle verbunden sein kann.

### Zeichnung

Anhand der Zeichnung wird die Erfindung nachstehend eingehender beschrieben. Es zeigt:
- Figur 1: eine schematische Wiedergabe einer eine Kupplung betätigenden Aktorik,
- Figur 2: eine Draufsicht auf eine Anpressplatte mit Keilprofilierung,
- Figur 3: einen Schnitt durch eine Einscheibenkupplung,
- Figur 4: die an der Druckplatte mit einem Gegenkeilprofil, an einer Anpressplatte mit Keilprofil sowie an einer Kupplungsscheibe angreifenden Kräfte und
- Figur 5: eine Gegenüberstellung der auf die Kupplung gemäß Figur 4 einwirkenden Kräfte Reibungskraft F_{R}, Aktorkraft F_{A}, Normalkraft F_{N} sowie der resultierenden Scheibenkraft F_{S}.

### Ausführungsvarianten

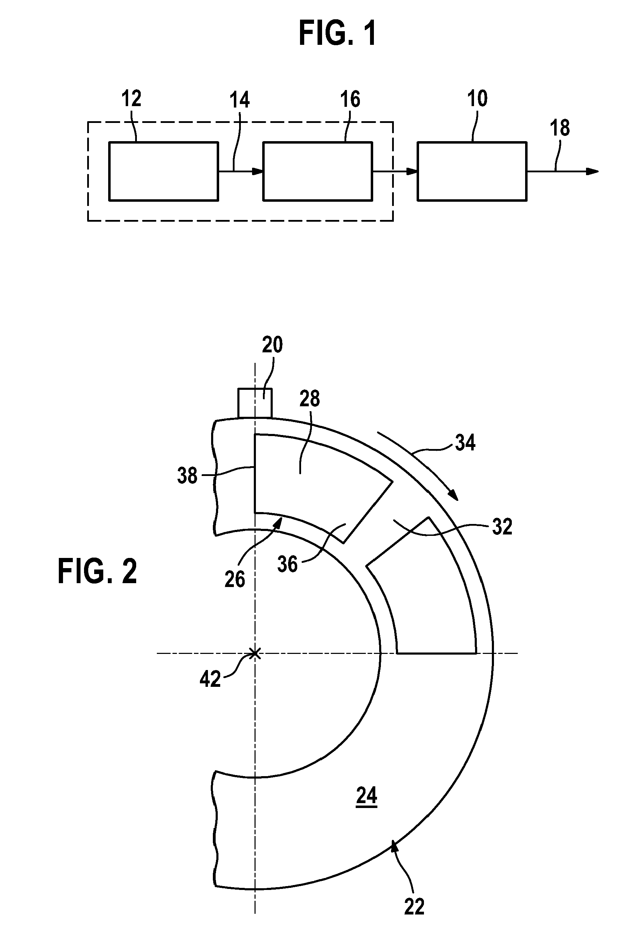

Der Darstellung gemäß Figur 1 ist eine schematische Wiedergabe einer Aktorik zur Betätigung einer Kupplung zu entnehmen.

Die Darstellung gemäß Figur 1 zeigt, dass eine Kupplung 10 zur Übertragung eines Drehmomentes 18 einen Aktor 12 umfasst, der eine Aktorkraft 14 erzeugt, die gegebenenfalls unter Zwischenschaltung einer Übersetzungsvorrichtung 16 erhöht werden kann.

Je nachdem, welche Aktorkräfte über den Aktor 12 erzeugt werden können, kann die in Figur 1 diesem nachgeschaltete Übersetzungsvorrichtung 16 auch entfallen und die Kupplung 10 durch den Aktor 12 unmittelbar betätigt werden.

Der Darstellung gemäß Figur 2 ist eine Draufsicht auf eine Anpressplatte zu entnehmen, die in der erfindungsgemäß vorgeschlagenen Kupplung eingesetzt wird.

Figur 2 zeigt in der Draufsicht eine Anpressplatte 22, auf deren Stirnseite 24 eine keilförmig ausgebildete Profilierung 26 verläuft. Von der auf der Stirnseite 24 angeordneten keilförmigen Profilierung 26 ist in der Draufsicht gemäß Figur 2 ein Keilabschnitt 28 dargestellt, der in eine Freifläche 32 übergeht. Bevorzugt sind mehrere Keilabschnitte 28 in Umfangsrichtung gleichmäßig verteilt auf der Stirnseite 24 der Anpressplatte 22 aufgenommen.

Die in Figur 2 auf der Stirnseite 24 der Anpressplatte 22 dargestellten Keilabschnitte 28 und 30 sind durch die Freifläche 32 voneinander getrennt. Die Anpressplatte 22 ist über einen dieser am Außenumfang zugeordneten Linearantrieb 20 im Drehsinn 34 - im vorliegende Falle im Uhrzeigersinn - verdrehbar. Der mindestens eine Keilabschnitt 28 gemäß der Darstellung in Figur 2 umfasst jeweils eine Keilkante 38, die in Richtung der Zeichenebene erhaben über die Stirnseite 24 der Anpressplatte 22 hervorsteht. Von der Keilkante 38 ausgehend, nimmt der in einer der Anpressplatte 22 entsprechenden Krümmung ausgebildete mindestens eine Keilabschnitt 28 einen allmählich abflachenden Verlauf und läuft in einen Keilauslauf 36 auf das Niveau der Stirnseite der Anpressplatte 22 aus. Zwischen mehreren Keilabschnitten 28 verbleibende Freiflächen 32 werden demnach durch einen Keilauslauf 36 und eine Keilkante 38 zweier hintereinanderliegender Keilabschnitte 28 begrenzt.

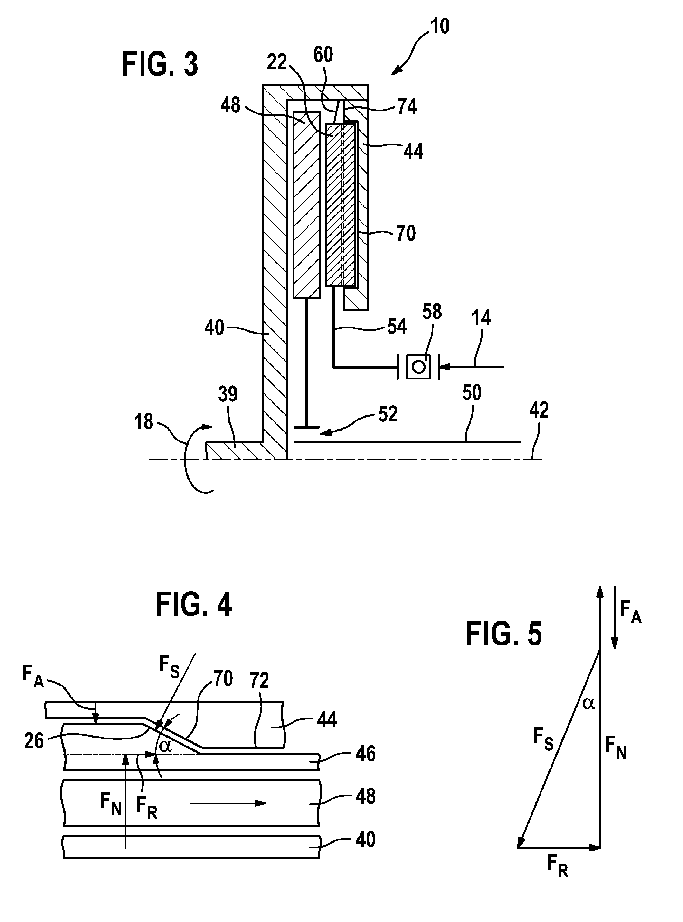

Figur 3 ist in schematischer Ansicht eine Seitenansicht der erfindungsgemäß vorgeschlagenen Kupplung zu entnehmen, die in der in Figur 3 dargestellten Ausführungsvariante als Einscheibenkupplung ausgebildet ist.

Auf einer hier nur angedeuteten Antriebswelle 39 befindet sich ein Kupplungskorb 40. Die Antriebswelle 39 mit daran aufgenommenem Kupplungskorb 40 rotiert um eine Rotationsachse 42. Am Kupplungskorb 40 ist ein Druckplattenabschnitt 44 ausgebildet. Der Druckplattenabschnitt 44 ist am Kupplungskorb 40 ausgebildet. Zwischen dem Druckplattenabschnitt 44 und dem Kupplungskorb 40 befindet sich eine Kupplungsscheibe 48. Die Kupplungsscheibe 48 ist - hier nur schematisch angedeutet - mit einer Abtriebswelle 50 durch eine Formschlussverbindung 52 verbunden. Die Abtriebswelle 50 verläuft konzentrisch zur Antriebswelle 39 des Kupplungskorbs 40. Zwischen der Kupplungsscheibe 48 und dem Druckplattenabschnitt 44 befindet sich die Anpressplatte 22, an der die in der Draufsicht gemäß Figur 2 dargestellte keilförmige Profilierung 26 ausgebildet ist. Die Anpressplatte 22 ist durch eine Rückstellfeder 60 beaufschlagt.

Die Anpressplatte 22 wird an einer innenliegenden Krafteinleitungsstelle 54 über die Aktorkraft 14 betätigt. Die Aktorkraft 14 wirkt auf ein Wälzlager 58, so dass die in axiale Richtung wirkende Aktorkraft 14 vom stationär angeordneten Aktor 12 an die rotierende Kupplung 10 reibungsarm übertragbar ist.

Die Anpressplatte 22 mit daran stirnseitig ausgebildeter keilförmiger Profilierung 26 ist durch mindestens eine Rückstellfeder 60 beaufschlagt.

In der Darstellung gemäß Figur 3 sind der Kupplungskorb 40, die Anpressplatte 22 mit keilförmiger Profilierung 26 sowie die Kupplungsscheibe 48 dargestellt. In der Darstellung gemäß Figur 3 handelt es sich um eine Einscheibenkupplung. Es ist selbstverständlich auch möglich, anstelle der in Figur 3 dargestellten Kupplungsscheibe 48 des Druckplattenabschnittes 44 und der Anpressplatte 22 diese Bauteile für eine zwei Teilkupplungen umfassende Doppelkupplung zu verwenden.

Der Darstellung gemäß Figur 4 sind die auf die Kupplung gemäß Figur 3 wirkenden Kräfte zu entnehmen.

Aus der Darstellung gemäß Figur 4 geht hervor, dass sich die keilförmige Profilierung 26 an der Stirnseite der Anpressplatte 22 befindet, die der Stirnseite 72 des Druckplattenabschnitts 44 zuweist. An dieser ist das komplementäre Keilprofil 70 ausgebildet, welches mit der keilförmigen Profilierung 26 der Anpressplatte 22 zusammenwirkt. Die keilförmige Profilierung 26 gemäß der Darstellung in Figur 5 weist einen Schrägungswinkel α auf. Die auf die Anpressplatte 22 wirkenden Kräfte sind die in radiale Richtung wirkende Reibungskraft F_{R}, die auf die um den Neigungswinkel α geneigte Schräge wirkende resultierende Scheibenkraft F_{S}, die Aktorkraft F_{A} sowie die Normalkraft F_{N}, die einander entgegengesetzt auf die Anpressplatte 22 wirken. Mit Bezugszeichen 48 ist die Kupplungsscheibe bezeichnet, welche im Drehsinn 34 - vergleiche Darstellung gemäß Figur 2 - rotiert.

Der Darstellung gemäß Figur 5 sind die Wirkungsrichtungen der in Figur 4 dargestellten, auf die Kupplung wirkenden Kräfte zu entnehmen.

Aus der Darstellung gemäß Figur 5 ist entnehmbar, dass die Aktorkraft F_{A} und die Normalkraft F_{N} einander entgegengesetzt verlaufen, jedoch ungleich große Beträge haben. Im Vergleich zur Normalkraft F_{N} ist die durch den Aktor 12 aufzubringende Aktorkraft F_{A} um ein Vielfaches kleiner, verglichen mit der Normalkraft F_{N}, die in entgegengesetzter Richtung auf die Anpressplatte 22 mit keilförmiger Profilierung 26 wirkt. Entsprechend des Neigungswinkels α der keilförmigen Profilierung 26 stellt sich eine resultierende Scheibenkraft ein, die der Summe aus Normalkraft F_{N} abzüglich der Aktorkraft F_{A} unter Berücksichtigung der in radiale Richtung wirkenden Reibungskraft F_{R} entspricht. Drückt die in Figur 5 schematisch angedeutete Anpressplatte 22 gegen die Kupplungsscheibe 48, so wird die Anpressplatte 22 durch die Reibungskraft F_{R} mitgezogen. Durch die keilförmige Profilierung 26, die an der Anpressplatte 22 ausgebildet ist und die sich zwischen der Anpressplatte 22 und der Stirnseite 72 des Druckplattenabschnitts 44 befindet, wird ein Teil der in radiale Richtung wirkenden Reibungskraft F_{R} in eine axiale Druckkraft umgewandelt. Der Teil der in tangentiale Richtung wirkenden Reibkraft F_{R}, der in axiale Druckkraft umgewandelt wird, wird als zusätzliche Energie für das Andrücken der Anpressplatte 22 mit Profilierung 26 an den Druckplattenabschnitt 44 des Kupplungskorbes 40 genutzt. Der Teil der in tangentiale Richtung wirkenden Reibungskraft F_{R}, der in eine axiale Druckkraft zur Unterstützung des Andrückens der Anpressplatte 22 an den Druckplattenabschnitt 44 des Kupplungskorbes 40 umgewandelt werden kann, ist im Wesentlichen abhängig von den Parametern Drehzahldifferenz zwischen der Anpressplatte 22 und dem Druckplattenabschnitt 44 mit komplementärem Keilprofil 70 des Kupplungskorbes 40, Neigungswinkel α und den Reibungseigenschaften. In vorteilhafter Weise lässt sich im Vergleich zur Bremse die erfindungsgemäß vorgeschlagene Kupplung 10 durch ihre vorteilhaften Eigenschaften in diesem Sinne zur Energierekuperation aus einer Rotationsbewegung nutzen, da an der Kupplung 10, wie vorstehend beschrieben, einerseits ein relativ niedriges Drehmoment 18 vorliegt und andererseits eine relativ geringe Dauerdrehzahldifferenz zwischen der Anpressplatte 22 und dem Druckplattenabschnitt 44 mit komplementärem Keilprofil 70 des Kupplungskorbes 40 vorliegt.

Je geringer die durch den Aktor 12 aufzubringende Aktorkraft F_{A} ist, desto kleinerbauend kann der Aktor 12 ausgelegt werden und ein desto geringerer Strombedarf stellt sich ein. Im Ausführungsbeispiel kann der Aktor 12 durch einen Linearantrieb 20 realisiert sein.

## Patentansprüche

1. Kupplung (10) zur Übertragung eines Drehmomentes (18) von einer Antriebswelle (39) auf mindestens eine Abtriebswelle (50) mit mindestens einem ersten Kupplungselement (44) und mindestens einem zweiten Kupplungselement (48), wobei das mindestens eine erste Kupplungselement (44) mit der Antriebswelle (39) und das mindestens eine zweite Kupplungselement (48) mit der mindestens einen Abtriebswelle (50) verbunden ist und mit mindestens einer Antriebseinrichtung (20), **dadurch gekennzeichnet, dass** zwischen dem mindestens einen ersten Kupplungselement (44) und dem mindestens einen zweiten Kupplungselement (48) mindestens eine betätigbare Anpressplatte (22) aufgenommen ist, die eine keilförmige Profilierung (26) aufweist.

2. Kupplung (10) gemäß Anspruch 1, **dadurch gekennzeichnet, dass** die keilförmige Profilierung (26) an einer Stirnseite (24) der mindestens einen Anpressplatte (22) ausgebildet ist, die dem mindestens einen ersten Kupplungselement (44) zuweist.

3. Kupplung (10) gemäß Anspruch 1, **dadurch gekennzeichnet, dass** die keilförmige Profilierung (26) an der mindestens einen Anpressplatte (22) in Umfangsrichtung verläuft.

4. Kupplung (10) gemäß Anspruch 1, **dadurch gekennzeichnet, dass** die keilförmige Profilierung (26) eine Anzahl von Keilabschnitten (28) aufweist, die jeweils voneinander durch eine Freifläche (32) getrennt sind.

5. Kupplung (10) gemäß der Ansprüche 3 und 4, **dadurch gekennzeichnet, dass** der mindestens eine Keilabschnitt (28) in Umfangsrichtung von einer Keilkante (38) ausgehend in einen Keilauslauf (36) übergehen.

6. Kupplung (10) gemäß Anspruch 1, **dadurch gekennzeichnet, dass** das mindestens eine Kupplungselement (44), welches bevorzugt als Druckplattenabschnitt ausgebildet ist, an einer der mindestens einen Anpressplatte (22) zuweisenden Stirnseite (72, 74) ein zur keilförmigen Profilierung (26) komplementäres Keilprofil (70) umfasst.

7. Kupplung (10) gemäß Anspruch 1, **dadurch gekennzeichnet, dass** die keilförmige Profilierung (26) an der mindestens einen Anpressplatte (22) derart ausgebildet ist, dass bei Kontakt der mindestens einen Anpressplatte (22) mit dem mindestens einen ersten Kupplungselement (44) eine in tangentiale Richtung wirkende Reibkraft F_{R} in eine axiale Druckkraft umgewandelt wird.

8. Kupplung (10) gemäß Anspruch 1, **dadurch gekennzeichnet, dass** ein Kupplungskorb (40) zwei erste Kupplungselemente (44) und zwei zweite Kupplungselemente (48) aufweist, zwischen denen jeweils eine betätigbare Anpressplatte (22) aufgenommen ist, die jeweils über einen als Linearantrieb (20) ausgebildeten Aktor (12) betätigt wird.

9. Kupplung (10) gemäß Anspruch 8, **dadurch gekennzeichnet, dass** die Linearantriebe (20) in Bezug auf den Kupplungskorb (40) in einer innenliegenden Einbauposition (54) oder in einer außenliegenden Einbauposition angeordnet sind.

10. Kupplung (10) gemäß Anspruch 1, **dadurch gekennzeichnet, dass** die mindestens eine Anpressplatte (22) mit ihrer nicht-profilierten Stirnseite dem Kupplungskorb (40) zuweist.
